# EUROPEAN PATENT APPLICATION

(11) **EP 2 251 620 A2**
(43) Date of publication of application: **17.11.2010**
(21) Application number: 10425143.4
(22) Date of filing: 30.04.2010
(51) Int. Cl.: F24H 9/12, F24J 2/34, F28D 20/00

(54) **Method and system for accumulating in layers and circulating hot water**

(30) Priority: 07.05.2009 IT BS20090083
(71) Applicant: Five-t S.r.l., 25060 Polaveno (BS) (IT)
(72) Inventor: Bonomi, Gianfranco, 25060 Polaveno (BS) (IT)
(74) Representative: Sangiacomo, Fulvia

(57) **Abstract**

The invention concerns a method and a system for an accumulation in layers in a tank, and for a circulation towards various systems, of hot water coming from a heating source, in particular thermal solar panels. The water accumulated in the tank is selectively drawn off from one of the layers at a given temperature, and sent towards the solar panels to be heated and then delivered again to the tank on a level with another layer of water at a higher temperature. The sending and return of the water to and from the solar panels is controlled by valve means based on the function of signals coming from a pilot panel and indicative of some of the climatic conditions of the ambient, in particular at least the intensity of the solar radiation and the temperature of the air.

## Description

### Field of the Invention

This invention concerns in general the field of liquid accumulators with thermal energy contents, and concerns in particular an innovative accumulation in layers system using a tank with a thermal carrier liquid, particularly water, and the circulation of the water, both to accumulate it and to use it according to its temperature.

### State of the Art

A thermal-hydraulic energy storage is one of the most convenient solutions for a rational management of the renewable natural energy sources, the availability of which is variable and up to a certain point unpredictable, not only for a long period, such as a year, but also for the length of one day, and almost never coincident with the progress of the contingent requirements.

And in fact also according to the state of art, a hot liquid, in particular water, coming from any heating source, whether solar, whether combustible, whether from devices cooled by water, perhaps at different temperatures, can be accumulated in layers in a tank or cistern for temporary storage of thermal energy. The storage can be carried out in a closed cycle and the thermal energy stocked is then used, for example, directly as a thermal carrier liquid in floor or radiator heating systems, or indirectly, using a possible heat exchanger, for other uses, such as the production of hot sanitary water, etc.

In this respect thermo hydraulic accumulation systems have already been proposed and used wherein water at different temperatures is collected in a tank in superimposed layers starting from the coldest at the bottom up to the hottest at the top, with the possibility then of drawing off the hottest water or however the water from the layer required to meet the needs envisaged.

Such accumulation is based on the physical theory that the weight density of the water varies according to the variations in temperature, so that in a tank the coldest water remains at the bottom whereas the hottest occupies the upper layers. Respectively, the temperature of the water stored in the tank will vary, increasing from the bottom towards the top if, of course, care is taken not to mix it and, consequently, mixing the water in various layers.

The documents DE 199 53 493 and DE 28 04 748 are representative of the prior art.

### Objective of the invention

However, the objective of this invention is to propose a system which is basically simple but innovative for the collection, conservation and reuse by means of water of, in particular, thermal energy from solar panels even over long periods of time, for example in the summer for the winter. With this system it is also possible to cover all the heating requirements and hot water supply. Its particular characteristic consists in optimizing, from the thermodynamic profile point of view, the thermal resource by automatically and intelligently taking care of the collection and drawing off of the water used as a thermo-vector fluid.

Such an objective is reached, according to the invention by a method of accumulation in layers in a tank and by circulating the hot water coming from a heating source, in particular from solar panels towards various systems, which comprises:
an accumulation of the heated water in the tank for the formation of different superimposed layers of water at increasing temperatures starting from the bottom towards the top of said tank,
drawing off water selectively from one of the layers of water at a given temperature for the delivery towards the input of the solar panels to be heated and a re-emission of the heated water returning from the solar panels into the tank at a level of another layer of water at a higher temperature,
continuous detecting of some environmental climatic conditions, in order to supply indicative signals of said conditions so as to determine from time to time the temperature of the solar panels for better management of the system, and
making a choice of from which layer of water in the tank the water to be delivered to the input of the solar panels shall be used and which other layer of water in the tank should receive the water returning from the solar panels in answer to the signals indicating the climatic conditions of the environment.

Advantageously, the detection of the environmental climatic conditions comprises at least a detection of the solar radiation and the temperature of the air in order to supply corresponding signals to a processing station set up to elaborate such signals and to manage the available devices provided to control the flows of water from the tank to the solar panels and vice versa.

### Brief Description of the Drawings

The invention will however be illustrated in greater detail in the description that follows made in reference to the attached drawings, in which:
Figs. 1- 8 show as many indicative diagram of the system according to the invention in various heat accumulation/usage conditions;
Figs. 9 and 10 show, respectively, an external view and a cross-section of an example of distribution with several inputs/outputs towards the accumulation tank and with a minor number of forward/return ducts towards the heating source and the systems;
Fig. 11 shows an example of several-way valves usable in the system;
Fig. 12 shows an example of a tube nest (bus), complete with several-way valves, that extend from the distributor towards the heating source and the systems; and
Figs. 13 and ,14 show a view in perspective and a cross-section, respectively, of the panel board.

### Detailed Description of the Invention

In said drawings a tank or cistern 21 is shown for accumulation in layers **a, b, c, d, e**, of hot water at different temperatures produced and coming from a heating source that, in the example shown, is made up of either traditional type solar panels 22, or the type configured to form a so-called thermal or solar roof, in which water is made to circulate by means of a pump. The temperatures indicated on a level with the various layers of water in the tank are not effective, but only indicative.

The tank 21 will be dimensioned based on the size of the deferred thermal requirements that are needed: from a few cubic metres to thousands of cubic metres in the case of a summer-winter season accumulation. It can be made out of cement, buried and isolated laterally, provided with a cover at the top, also isolated, nevertheless for operating preferably at atmospheric pressure

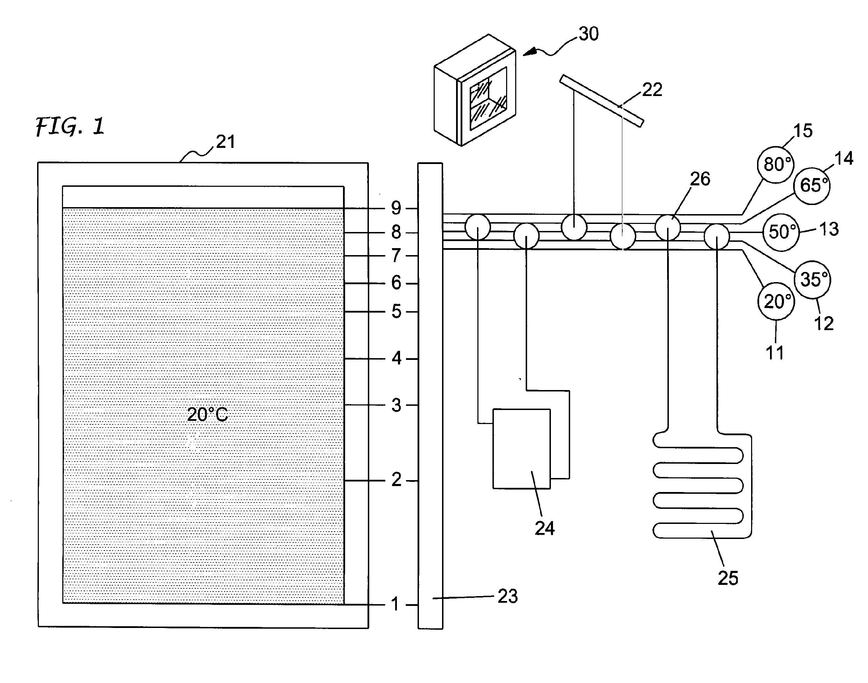

The tank is provided, on the side, with a plurality of inlets or water input/output intakes placed at different levels and also in different numbers from those of the layers of water **a - e.** In fact, in the example shown there are nine inputs or outputs, numbered from **1 - 9** from the bottom upwards, and are connected to the same number of inputs of a hydraulic distributor 23 having the outputs from which extends a nest, or bus, of other ducts -Figs. 1- 8, 12, in the example five numbered **11**, **12, 13, 14 , 15**, respectively. This for a forward and back return of the water towards the solar panels 22, and also towards high temperature systems 24, for example a radiator heating systems, towards low temperature systems 25 or, by means of possible heat exchangers for the production of sanitary water. The water in fact can then flow selectively, in one direction, from the various layers of water in the tank 21 to the hydraulic distributor 23 and from the latter, through the tube nest 11 -15, to the solar panels 22 and to the various systems and in an opposite direction, from the solar panels and from various systems, to the distributor and therefore again to the various layers of water in the accumulation tank.

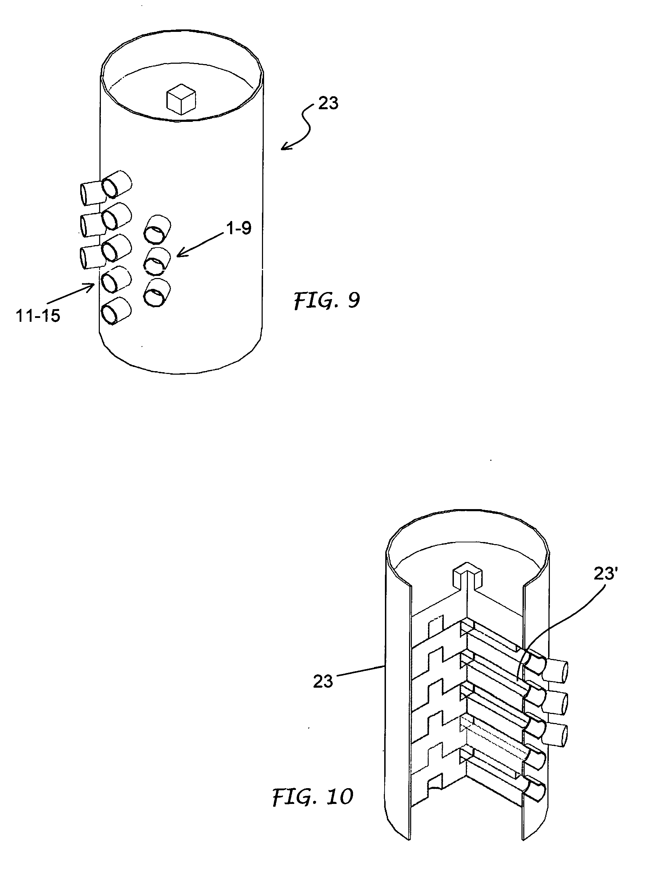

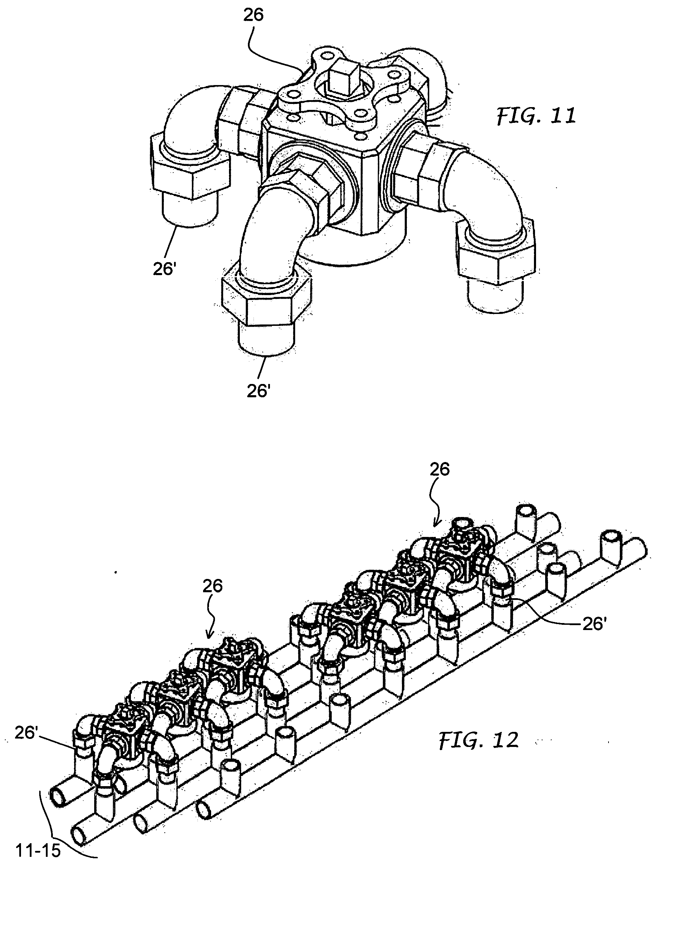

The circulation of the water from the tank 21 to the hydraulic distributor 23 using the input/output ducts **1- 9,** and vice versa, and from the distributor towards the panels and the various systems are controlled by valve means 23' placed in the distributor-Figs. 9, 10, whereas the circulation of the water along the delivery and return ducts **11-15** which go from the hydraulic distributor 23 to the solar panels and to the systems is controlled by single valves 26, each with several ways 26' -Fig. 11, all managed externally by a pilot panel 30, described further on.

The valves with several ways will be conveniently connected to the ducts **11- 15,** and the valve means 23' of the distributor 23 and each several way valve 26 will be controlled by an appropriate actuator - not shown- however operable at a distance.

In effect, the hydraulic distributor 23 is designed to act as an interface between the nest, or bus, of ducts **11 - 15** and the accumulation tank of the heat 21.

As shown, to access (for example) the layers of water **a - e** with different temperatures both when the tank is thermetically very loaded and when it is thermetically underloaded, it is necessary for the communication inlets to be alternatively distributed on all the height (very loaded) or grouped only in the high portion of the tank (underloaded), and the valve means inside the distributor 23 will be provided to place each inlet **1 - 9** of the tank in communication from time to time with each of the ducts **11 - 15** and by these with the heating source 22 and with one, the other or both of the systems 24, 25, according to requirements.

In particular, then, in order to be able to manage the pilot panel system 30, that can be defined as thermo-radiative, is designed to continuously detect the climatic conditions in the ambient in which the solar panels 22 are installed. It is configured to make use of the information deriving from temperature probes, collocated in a particular way and able to determine the temperature the thermal solar panels can operate in (the work point) when a layer accumulation system like the one described above is available, and therefore where it is necessary to choose, between the various possibilities, from which inlet or tube to draw off and which tube to adopt to pour the water back into the tank.

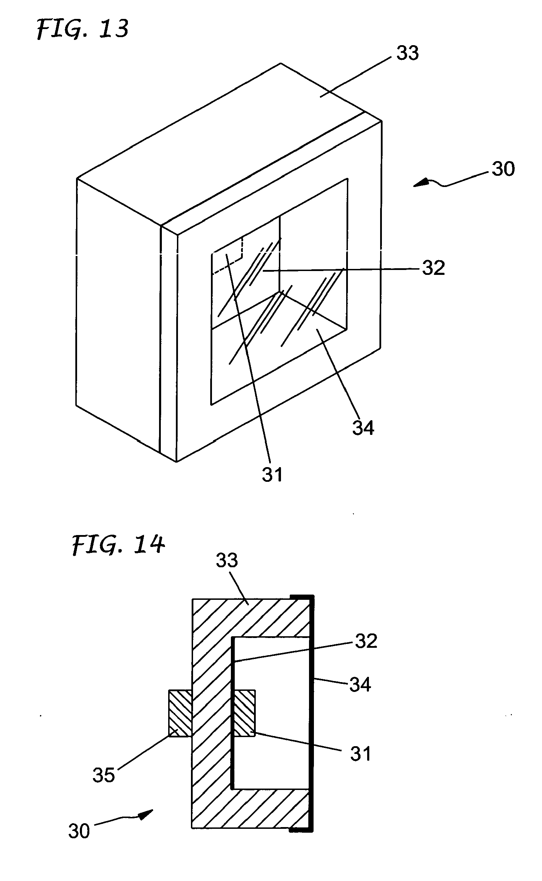

In detail, the temperature probes are placed on board the pilot panel 30 and there are two - Fig. 13, 14. A first temperature probel 31 is in thermal contact with a "blackened" 32 absorber plate, both placed on the bottom of a box shaped body 33 made of an isolating material with one of its sides exposed to the sun and closed by a glass pane 34. Esentially the pilot panel appears to be similar, in miniature, to a thermal solar panel, except for the fact that it does not have a water or air inlet or outlet. In these conditions the temperature reached by the plate 32 corresponds to the balance between the gain due to the solar radiation and the loss due both to the radioactive exchange with the sky and the convective exchange, represent the maximum temperature the real solar panels could reach (with similar plate and glass) if the water did not circulate (stagnation temperature) in those temperature and radiancy conditions.

A second temperature probe 35 placed behind the box-shaped body 33 measures the normal temperature of the air and can be made up of any other thermal probe, as long as it is in the shade.

The values of the two temperatures are used to decide which temperature the solar panels must operate at. It is in fact possible to check that, according to the normal curve characteristics of the thermal solar panels, if the operating temperature is equal (for example) to the average between a **T**max corresponding to the stagnation conditions (with zero efficiency) and a **T**ambient (with very high efficiency but with the quality of the energy produced very low) good efficiency is reached and a good quality energy produced. Such a temperature is obtained both by acting on the inlet or the outlet from the tank with layers of water, or on the circulation pump delivery and consequently on the outlet temperature (with on-off operation or continuous modulation).

The following examples illustrate some of the various cases.
1)
   Solar radiation = 700 W/mq
   Air temperature = 15°C
   Radiant temperature of the sky = -10°C
   Considering that the temperature reached by the absorber plate 32 in these conditions is 110°C, the temperature to make the panel operate at is equal to the average (or another opportune fraction) between 110°C and 15°C, that is 62,5°C. On the basis of this information supplied by the pilot panel 30, the system will draw off the water from the tank with several layers from the one corresponding to 50 °C and, on adjusting the delivery to have an output at 65°C, it will be returned to the tank using the corresponding inlet.
2)
   Solar radiation = 300 W/mq
   Air temperature = 5 °C
   Radiant temperature of the sky = - 20 °C
   Considering in this case that the temperature reached by the in absorber plate 32 is 60°C, the temperature to make the panel operate at is the average between 5°C and 60°C, that is 32,5. The system will draw off the water from the layer at 20°C and it will return it to the tank at 35°C (using the corresponding inlets or ducts).

From the constructive point of view, the pilot panel 30 can have, for example, the body 33 with internal dimensions with a depth of 10x10 cm x 5 cm, and walls made of polystyrene foam with a width of 2 cm. The plate on the bottom 32 can be copper with relative surface treatment (similar to that of the required solar panels). The first temperature probel 31 (e.g. a Pt 1000) is placed in contact with said plate 32, while the second probe 35, (also a Pt 1000) is placed on the back of the body 33.

Basically, the distributor 23 and the ducts **11 - 15** with relative multi-way valves 26 allow different routes of water from and to the tank according to requirements depending on the thermal load state of the tank. Both the valve devices 23' of the distributor 23, and the individual multi-way valves 26' will be automatically controlled and run by a control system which, although not shown, can be made up of: a microprocessor; temperature probes; a control logic of the valves implemented by dedicated management software configured to detect the signals coming from the pilot panel and correspondingly activating said distributor and said valves.

This adjustment technique carried out by the pilot panel 30, tends to produce water at intermediate temperatures (in low insolation conditions) for then to reuse it in the favourable conditions (high insolation) to produce water at higher temperatures. In this way you have a higher quantity average at a low temperature and water at a high temperature to the detrement of the quantity of water at intermediate temperatures.

The availabilty of water at a low temperature allows the operation (with acceptable efficiency) in low insolation conditions; the water at a high temperature is provided to the user systems. The intermediate temperatures regenerate during the use of the stored heat. The information provided by the pilot panel 30 is transmitted and elaborated by a specially programmed controller and enables it to provide and maintain the appropriate operating conditions of the solar panels without waiting (sometimes in vain) for the evolution of long transients. The system can however be considered as low entropy.

In said system, the water heated by the solar panels is put in the tank gradually at appropiate levels creating and maintaining on entry a stratification **a - e** based on its temperature. However, the heat is not stored in an undifferentiated way, but based on its level. The pilot panel 30, in fact allows it to be determined from time to time, according to the climatic conditions of the ambient, consequently based on the solar radiation, the temperature of the air and the sky, the temperature the panels must function at to create the best efficiency of the system.

With an appropriate insulation of the tank and making sure to reduce to a minimum the turbulences inside it, this stratification conserves for long time. In fase d'utilizzo it is therefore possible to draw off the hot water at the most advantageous temperature under the thermodynamic profile.

The caccumulated heat can be used in the winter season for higher temperature purposes, up to 80°C, for radiator systems, and also for use with low temperature systems such as floor heating and, through heat exchangers, of sanitary water.

The peculiarities of the system are from here on exemplified by simulating the fuction in some different ambient conditions, both in the thermohydraulic accumulation phase, and in the water use one.

### In the summer season.

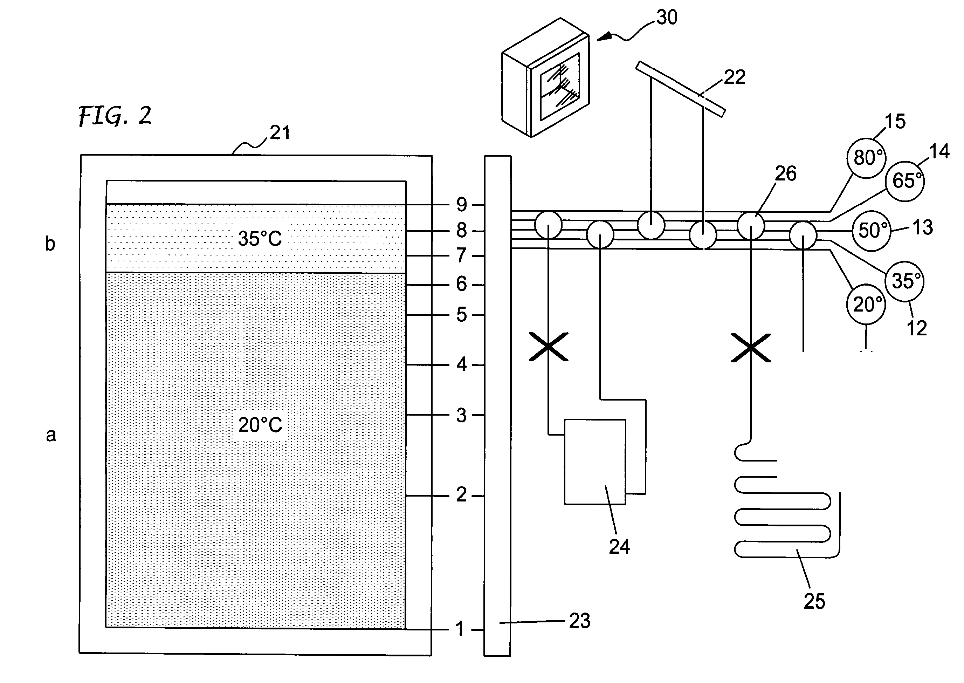

The tank is supposed to be initially inizialmente without thermal energy, that is containing the mass of water all at the same temperature, for example 20°C -Fig. 1- as it more or less is at the end of a long period of use in winter, even if it can be plausable that the initial condition can be more favourable due to the presence of thermal states of over 20°C left over from the previous phase or accumulated in the past Spring months -Fig 2.

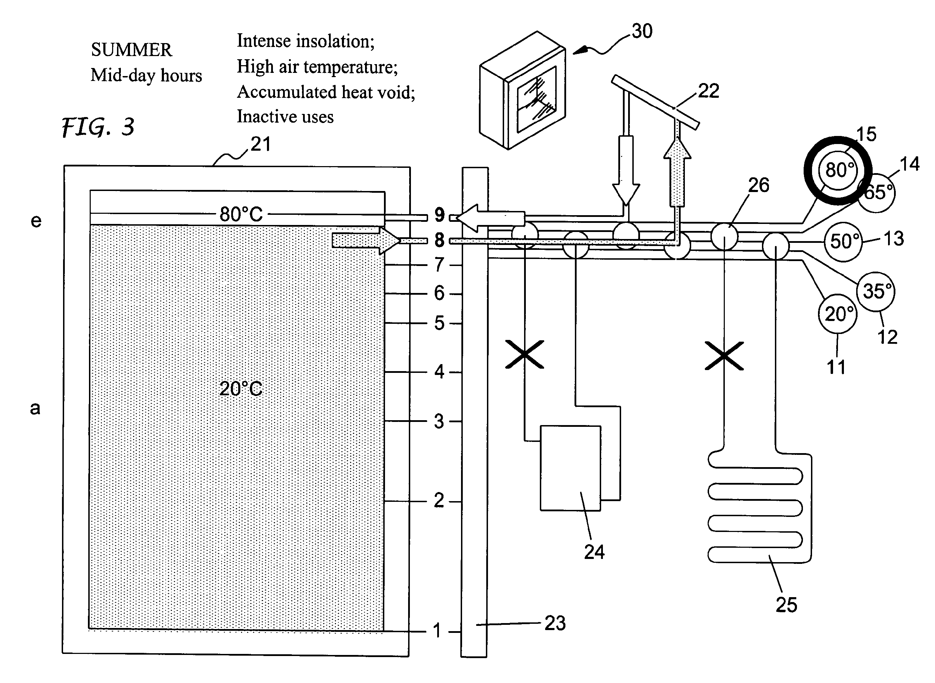

In Summer, in the mid-day hours, the radiation of the sun is intense and the temperature of the air is high. In these conditions the panels heat the water, for example, up to a temperature of 80°C producing very high thermal energy efficiency . This heat must be put into the tank at the highest level drawing off the water, for the circulation towards the panels, from the level below -Fig. 3.

In this way, the pilot panel 30 will have collected the present ambient conditions; the control system has acquired them and has controlled the multi-way 26'valves 26 and the distributor 23 with nine-five ways making the required path indicated by the arrows operative.

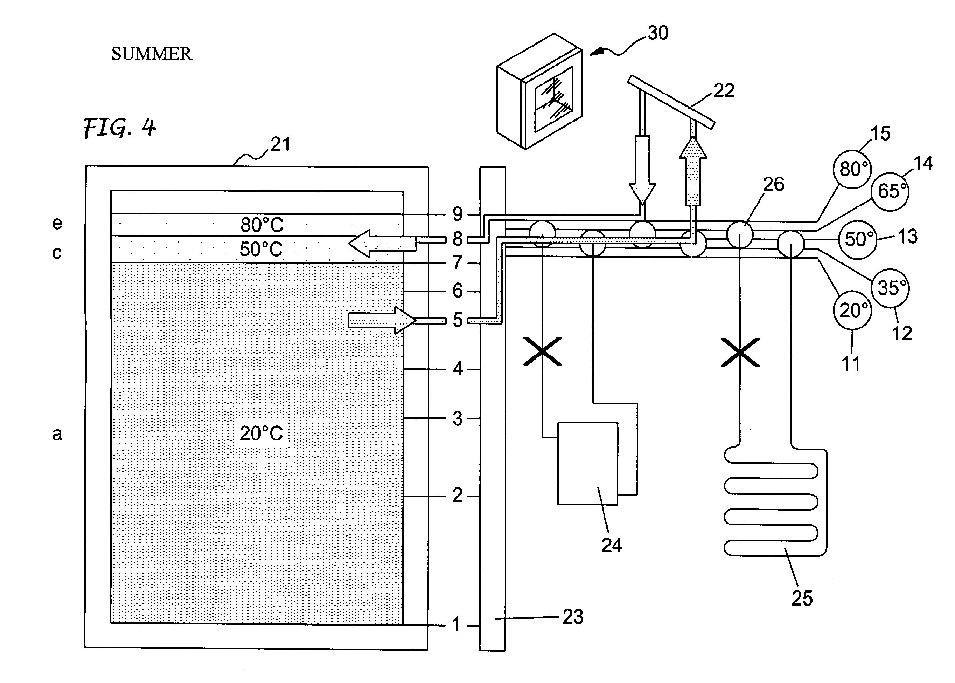

Then in summer, in the afternoon hours the solar radiation is more moderate, the temperature still remains high. So, the water circulating in the solar panels reaches a lower temperature. To create the stratification, this less particular heat must not be mixed with the one previously stored at 80°C. The control system, informed by the pilot panel 30 about the new condition, changes the configuration of the distributor system. The water is drawn off by an intake at level 5 for example and put into the tank ata higher level, for example level 8. The water at 50°C forms a distinct layer.from the previous higher one, -Fig. 4.

With the extension of the summer season, the heat is accumulated according to the criteria illustrated.

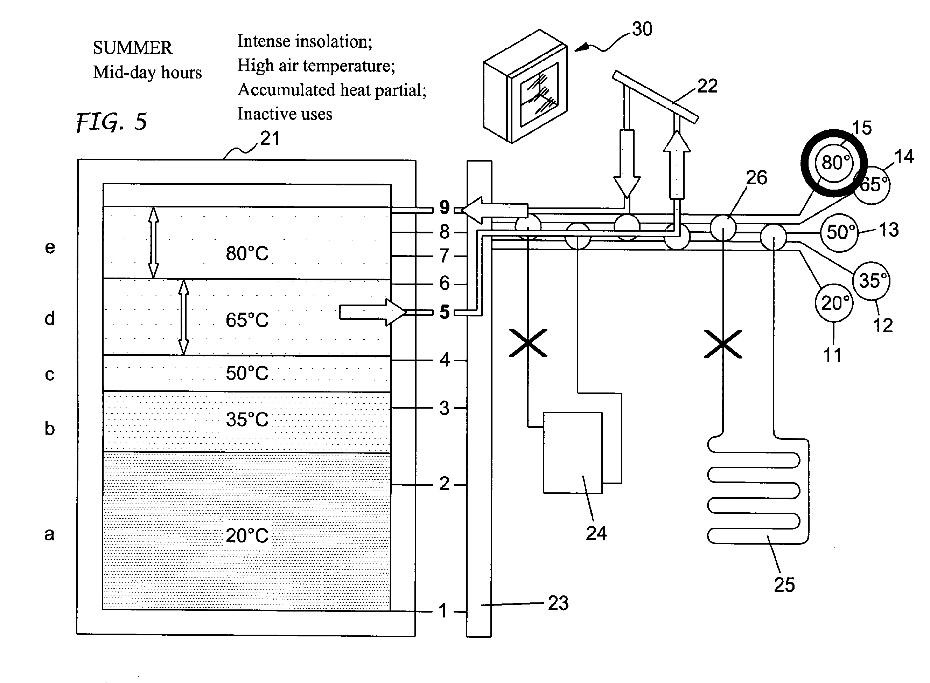

According to the intensity of the insolation the hot water is added from time to time into the most appropriate level determining progressively more layers of water at different temperatures. After a period of time the accumulation in layers will be, for example, as shown in Fig. 5.

Considering that the insolation is intense and the temperature is high: the water in the solar panels heats up to 80°C, and is drawn off from the lower layer at 65°C. The control arranges the flow from output 5 to input 9. The layer at 80°C will increase then to the detriment of the one at 65°C.

With a less intense solar radiation and an temperature of the air still high, similar to a late summer afternoon: the pilot panel 30 signals the ambient conditions; the control system controls the distributor and the multi-way valves so as to form the most appropriate path.

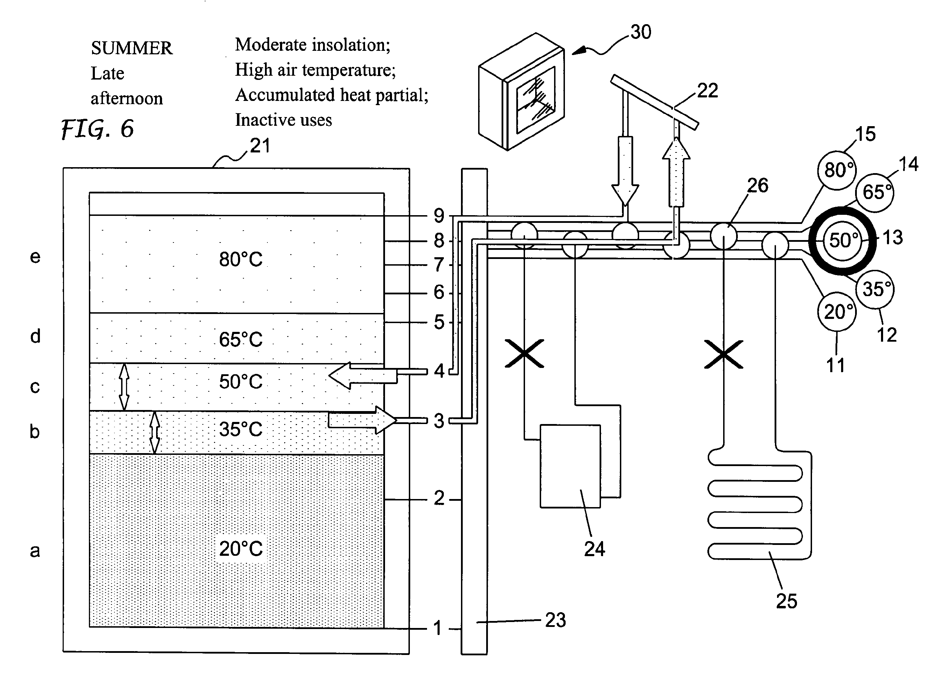

For exampl, the layer at 50°C increases and the one at 35°C descreases - Fig. 6.

### In the autumn

With the beginning of autumn the use of heat for heating, for example, starts.

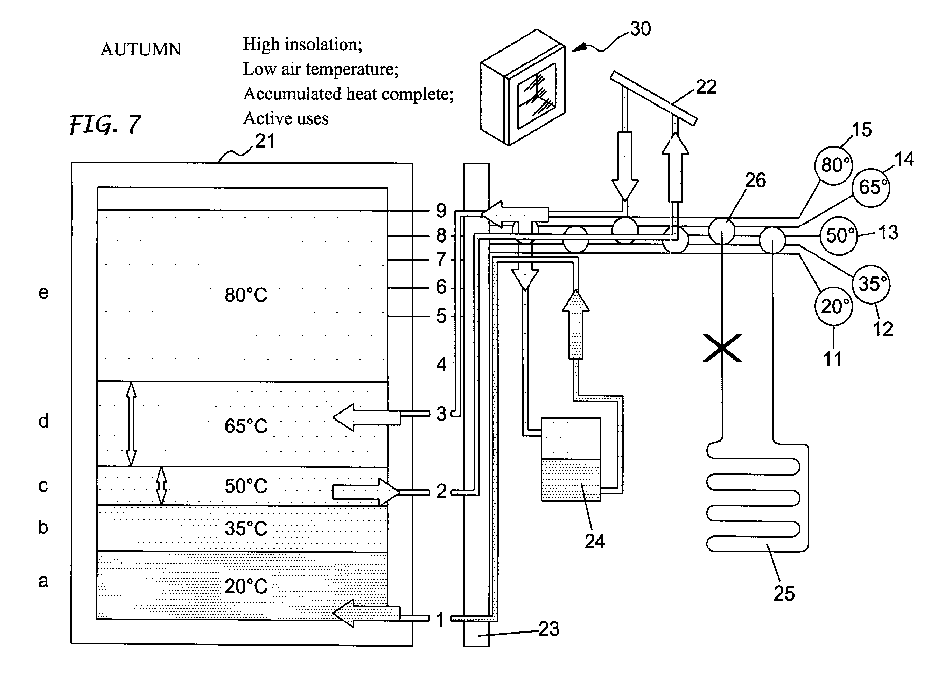

Solar radiation is still quite high and the temperature is moderate:
at the same time it is possible to have the production of hot water on the part of the solar panels and a partial use of the water at a high temperature in the tank. The heated water is in part directly used and in part still accumulated in the corresponding level livello -Fig. 7 .

### In the winter

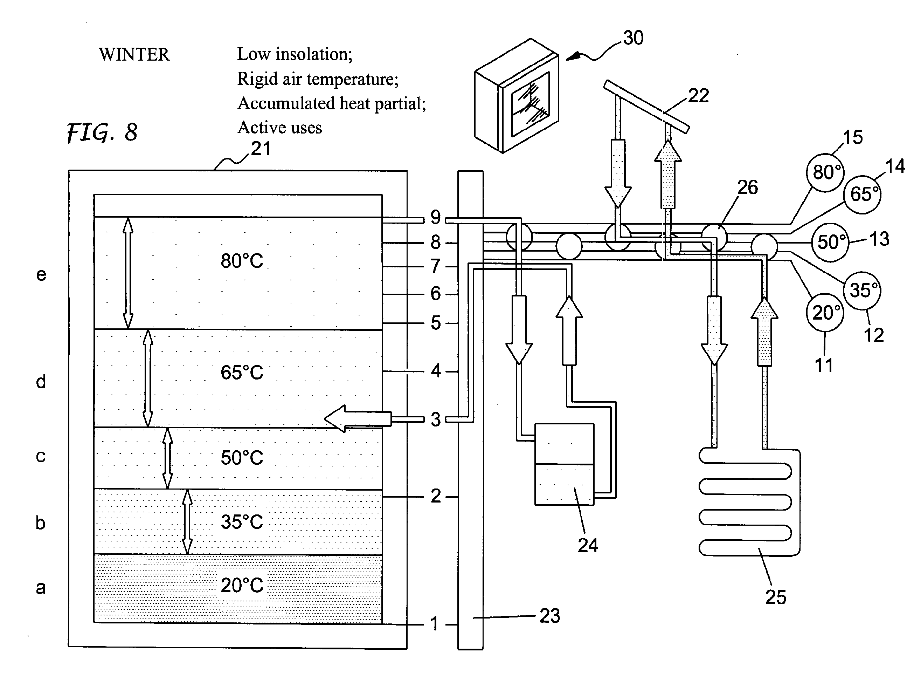

During the winter season all the systems are operating, but the production of heat is limited. The consumption of the systems 24, 25 is high; the hotter layers gradually become less, those with lower temperatures will increase -Fig. 8.

At the end of the winter season the tank will be without useful thermal energy: it will rely on, as initially - Figs 1 and 2, the water with a minimum temperature difference. If adequately dimentioned the system will have all the needs envisaged for the connected systems supplied and with the increase of the insolation will begin a new accumulation cycle.

## Claims

1. A method for accumulating in layers in a tank (21) and circulating it towards various systems of hot water coming from a heating source, in particular from solar panels (22), comprising the steps of:
collecting the heated water in the tank (21) for the formation of different superimposed layers (a-e) of water at increasing temperatures starting from the bottom towards the top of said tank,
drawing off water selectively from one of the layers (a-e) of water at a given temperature for the delivery towards the input of the solar panels to be heated and a re-emission of the heated water returning from the solar panels into the tank at a level of another layer of water at a higher temperature,
continuous detecting of some environmental climatic conditions, in order to supply indicative signals of said conditions so as to determine from time to time the temperature of the solar panels for better management of the system, and
making a choice of from which layer of water in the tank the water to be delivered to the input of the solar panels shall be used and which other layer of water in the tank should receive the water returning from the solar panels in answer to the signals indicating the climatic conditions of the environment.

2. The method according to claim 1, **characterised in that** the recording of the climatic conditions of the environment comprises at least a recording of the intensity of the radiation of the sun and the temperature of the air to supply corresponding signals to a processing control unit and to manage by this the means provided for the control of the flow of water from the tank to the solar panels and vice versa.

3. The method according to claims 1 and 2, **characterised in that** the signals deriving from the recording of the climatic conditions of the environment are representative of the difference between the advantage gained from the solar radiation and the loss due both to a radiative exchange with the sky and a convective exchange on the part of the solar panels.

4. The method according to the previous claims, **characterised in that** the signals deriving from the recording of said climatic conditions are elaborated so as to control the production of water at intermediate temperatures in low solar radiation conditions (isolation) to then be reused in favourable high solar radiation conditions (isolation) to produce water at a higher temperature.

5. The method according to the previous claims, **characterised in that** the signals deriving from the recording of said climatic conditions
are elaborated to set up and maintain continuously the correct operating conditions of the solar panels in a condition considered as low entropy.

6. A system for accumulating in layers and for the circulation towards various systems of hot water coming from a heating source, in particular from solar panels (22), comprising a tank (21) for accumulating hot water at different temperatures in layers (a, b, c, d, e) produced by said solar panels, and ducts (11- 15) for the delivery /return of the water from the tank to the solar panels and to said systems, **characterised in that** a multi-way input and output (23, 23') distributor is connected on one side to said collection tank (21) and on the other to said ducts (11-15) and designed to control a sampling of water selectively from one of the layers of water at a given temperature for its delivery towards the input of the solar panels to be heated and a return of the heated water from the solar panels to the tank on a level with another layer of water at a higher temperature, by means (30) for continuously recording certain climatic conditions of the environment and supplying indicative signals of said conditions so as to set, from time to time, the operating temperature of the solar panels for an improved management of the system, and means for choosing from which layer of water in the tank to be delivered to the input of the solar panels and which layer of water in the tank to receive the return water from the solar panels (30).

7. System according to claim 6, **characterised in that** the tank (21) has a number of inlets or taps (1-9) placed at various levels, and said distributor has the entrance ducts connected to said inlets or taps (1- 9) and the outlet ducts connected to the ducts (11-15) for the delivery/return of the water from the collection tank to the solar panels and to the different systems.

8. System according to claim 6 or 7, **characterised in that** the number of said inlets or tap (1-9) and of entrance ducts of the distributor can be more than the layers of water in the collection tank, and the number outlet ducts (11-15) of the distributor and the delivery/return ducts of the water to the solar panels and various systems can be less than the inlets or taps of said tank.

9. System according to claims 6 - 8, **characterised in that** the distributor (23) has controlled valve means(23') controlled to place its entrance ducts in communication selectively with each of its outlet ducts and, by means of these, to the delivery/return ducts to the solar panels and various systems, and **in that** variously positioned multi-way valves (26), managed to control the delivery/return of the water to the solar panels and various systems, are connected to said ducts.

10. System according to any of the claims from 6 to 9, **characterised in that** said means for recording the climatic conditions of the environment comprise a pilot panel (30) configured to monitor at least the intensity of the solar radiation and the temperature of the air, so as to supply corresponding signals to an electronic control unit and for managing the valve means of said distributor (23) and the multi-way valves (26), controlling the water ducts from the tank to the solar panels and back.

11. System according to claim 10, **characterised in that** said pilot panel (30) comprises a body made of an insulating material (33) having a closed cavity at the front by glass (34) and exposed to the insulation, an absorber plate (32), made of copper, "blackened", placed on the bottom of said cavity, a first temperature probe (31) in contact with said absorber plate (32), and a second temperature probe (35) shadowed on the back of said body, so that said first probe (31) measures the temperature level of said plate (32) and the second probe (35) measures the normal air temperature.

12. System according to claim 11, **characterised in that** said pilot panel (30) generates indicative climatic condition signals which are elaborated to set up and constantly maintain the correct operating conditions of the solar panels in a low entropy condition.
